# EUROPEAN PATENT SPECIFICATION

(11) **EP 3 410 595 B1**
(45) Date of publication and mention of the grant of the patent: **29.09.2021**
(21) Application number: 17173999.8
(22) Date of filing: 01.06.2017
(51) Int. Cl.: H02M 7/49

(54) **DISCONNECTING A SUBSEA AC/AC POWER CONVERTER CELL**
UNTERSEE WECHSELRICHTERLEISTUNGSUMWANDLERZELLENUNTERBRECHUNG
DECONNECTION DE CELLULE DE CONVERTISSEUR DE PUISSANCE MARIN À COURANT ALTERNATIF

(43) Date of publication of application: 05.12.2018
(73) Proprietor: ABB Schweiz AG, 5400 Baden (CH)
(72) Inventor: SCHAEFFER, David, 724 61 Västerås (SE); LENDENMANN, Heinz, 722 18 Västerås (SE); DAMAZIO-COELHO, Kefas, 5415 Nussbaumen (CH); BLOCH, Richard, 6414 Oberarth (CH)
(74) Representative: Kransell & Wennborg KB

(56) References cited:
- EP-A2- 2 698 912
- EP-A2- 2 782 240
- US-A1- 2015 171 733

## Description

### TECHNICAL FIELD

The invention relates to a subsea AC/AC power converter cell and an AC/AC power converter comprising a plurality of such AC/AC power converter cells. More particularly, the invention relates to disconnection of a subsea AC/AC power converter cell, e.g. when found to be faulty.

### BACKGROUND

Power converters are used for a great number of different purposes. One type of power converter is a subsea AC (Alternating Current)/AC converter. Subsea AC/AC converters can e.g. be used when AC is used for power distribution from the surface but an AC power output of controllable frequency is desired. For instance, AC/AC converters can be used as variable speed drives (VSDs) for AC motors, e.g. of a pump, etc.

One type of subsea AC/AC power converter is where a plurality of converter cells contribute to the power conversion, allowing synthesis of a desired AC power signal for powering loads.

For subsea applications, installations can be deep in the sea, whereby any maintenance is very cumbersome and costly. Hence, where converter cells are used, the disconnection of converter cells needs to be very reliable. At the same time, the converter cells should be controlled in an efficient manner. EP 2 782 240 A2 discloses an improved power cell bypass method and apparatus for multilevel inverter.

### SUMMARY

It is an object to provide a more reliable way of bypassing a subsea AC/AC power converter cell.

According to a first aspect, it is provided an subsea AC/AC power converter cell according to claim 1.

The subsea AC/AC power converter cell may further comprise a discharging resistor provided in parallel to the capacitor.

The cell input connection may comprise input terminals for three phases. The number of input disconnector switches may correspond to the number of phases of the cell input connection.

The subsea AC/AC power converter cell may comprise two output disconnector switches.

Each one of the input disconnector switches and each one of the at least one output disconnector switches may be a mechanical switch.

According to a second aspect, it is provided a subsea AC/AC power converter comprising: a main AC input connection for receiving AC power of at least two phases; a plurality of subsea AC/AC power converter cells according to the first aspect; a multi-winding transformer connected between the main AC input connection and each one of the plurality of subsea AC/AC power converter cells; a main AC output connection connected to the cell output connections of the plurality of subsea AC/AC power converter cells; and a central controller connected to the disconnector inputs of each one of the plurality of subsea AC/AC power converter cells.

The central controller may be configured to detect a faulty subsea AC/AC power converter cells and to, when a faulty subsea AC/AC power converter cells is detected, open the input disconnector switches and close the at least one output disconnector switch.

The main AC output connection may comprise a plurality of phases in which case the cell output connection of each one of the plurality of subsea AC/AC power converter cells is connected to only one of the plurality of phases.

There may be the same number of subsea AC/AC power converter cells connected to each one of the plurality of phases of the main AC output connection.

The power converter may be a subsea power converter comprising a housing filled with a dielectric liquid and also comprising a pressure compensator arranged to balance the internal pressure to the external pressure.

### BRIEF DESCRIPTION OF THE DRAWINGS

The invention is now described, by way of example, with reference to the accompanying drawings, in which:
Fig 1 is a schematic drawing illustrating an environment in which embodiments presented herein can be applied; and
Fig 2 is a schematic drawing illustrating an embodiment of a converter cell being any one of the converter cells of Fig 1.

### DETAILED DESCRIPTION

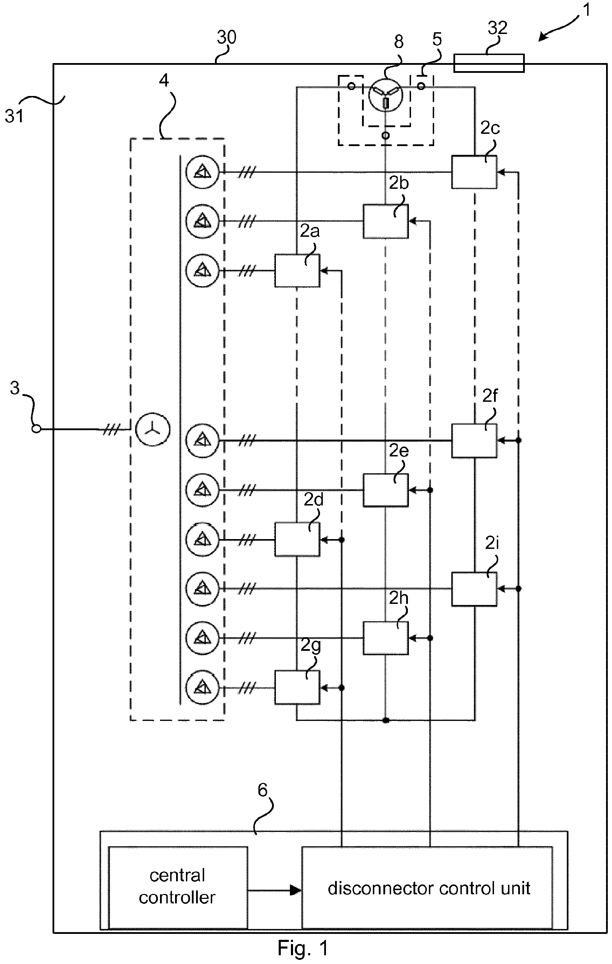

Fig 1 is a schematic drawing illustrating an environment in which embodiments presented herein can be applied. A subsea AC/AC power converter 1 is used for converting input AC power provided on a main AC input connection 3 to AC power on a main AC output connection 5 for powering a load 8. The frequency on the AC output connection 4 can thus be controlled, e.g. to thus form as a variable speed drive when the load 8 is a motor. This type of power converter is particularly applicable in subsea applications.

The received AC power on the main AC input 3 is of at least two phases. In this embodiment, there are three input phases.

A plurality of subsea AC/AC power converter cells 2a-i are provided. In order to improve readability, the term converter cell is used hereinafter, referring to any one of the subsea AC/AC power converter cells 2a-i.

Each converter cell 2a-i converts input multiphase AC power to output AC power of one phase with desired characteristics. For each phase of the main AC output connection 5, several converter cells are serially connected, thereby collectively contributing to the power of the respective phase of the main AC output connection 5.

A multi-winding transformer 4 is connected between the main AC input connection 3 and each one of the plurality of converter cells 2a-i. The multi-winding transformer 4 is connected on its primary side to the main AC input connection 3 and on its secondary side, using separate windings, to each one of the converter cells 2a-i. The multi-winding transformer 4 converts power from multiple phases of its primary side to multiple phases to each one of the converter cells 2a-i.

A central controller 6 is connected to disconnector inputs of each one of the plurality of converter cells 2a-i. In this way, when the central controller 6 detects that a converter cell is faulty, the central controller can control disconnector switches of the converter cells 2a-i such that the faulty converter cell is bypassed on its output side and disconnected on its input side.

In one embodiment, a single disconnect command for a converter cell is generated by the central controller. A disconnector control board translates this disconnect command to individual control signals sent to the disconnector switches of the converter cell which is to be disconnected. In this way, no further signal translation is required in each converter cell, which makes the disconnection very robust and secure.

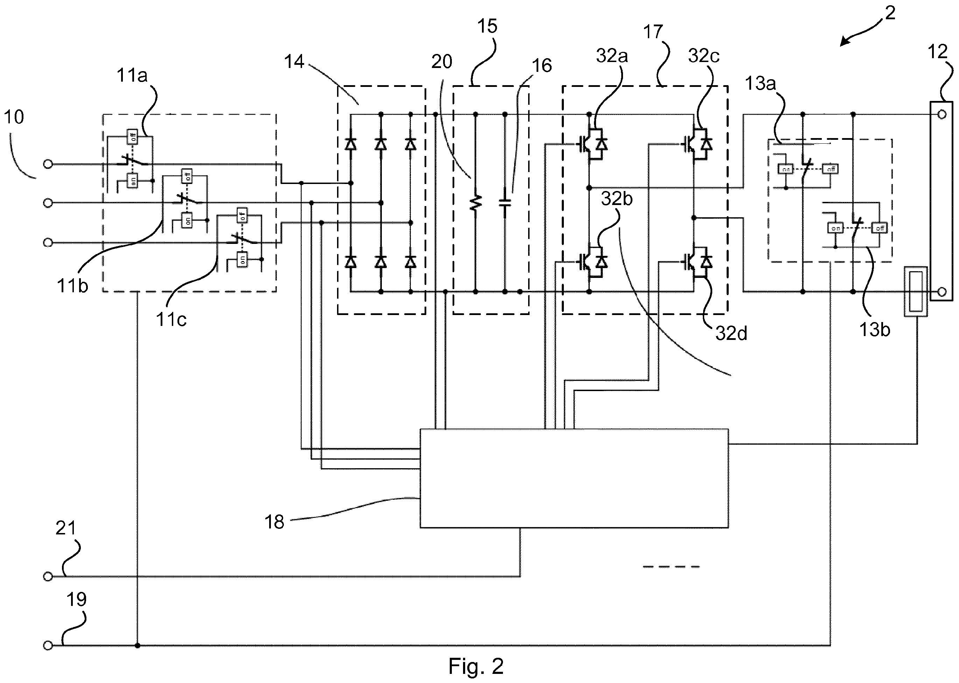

How the disconnection occurs inside the converter cell is explained in further detail below with reference to Fig 2. As long as the number of remaining converter cells are sufficient for the required power, the faulty converter cell can in this way be bypassed and the subsea AC/AC power converter 1 can continue to operate normally. This increases reliability of the subsea AC/AC power converter 1, which is of utmost importance e.g. in subsea applications where any maintenance work is cumbersome and expensive.

Optionally, for allowing subsea installation, the subsea AC/AC power converter 1 comprises a housing 30 filled with a dielectric liquid 31 and also comprising a pressure compensator 32 arranged to balance internal pressure (inside the housing 30) and external pressure (outside the housing 30).

Fig 2 is a schematic drawing illustrating an embodiment of a converter cell 2 (i.e. an converter cell) being any one of the converter cells of Fig 1.

The converter cell 2 comprises a cell input connection 10 comprising input terminals for at least two phases. In this embodiment, there are input terminals for three phases. Input disconnector switches 11a-c are provided connected to respective input terminals of the input connection 10. In one embodiment, the number of input disconnector switches 11a-c correspond to the number of phases of the cell input connection 10. However, it is sufficient if the number of input disconnector switches is one less than the number of phases of the cell input connection. Analogously, having one input disconnector switches 11a-c are connected to each one of the input terminals of the input connection 10 provides redundancy, since it is sufficient if all but one of these input terminals are disconnected upon failure.

A cell output connection 12 provides output AC power. The AC power is of only one phase. At least one output disconnector switch 13a-b is connected between terminals of the output connection 12, i.e. with a capability of short circuiting the terminals of the output connection 12. In one embodiment, there are two output disconnector switches 13a-b, which provides additional redundancy if an output disconnector switch were to malfunction.

The converter cell 2 works by converting input multiphase AC to DC and then to a desired output AC. Accordingly, a rectifier stage 1 is connected between the input disconnector switches 11a-c and a DC bridge 15 to convert the input AC to DC. The rectifier stage 14, can e.g. be implemented using a diode bridge. Alternatively, a more advanced rectifier stage can be implemented, e.g. using thyristors and/or transistors. A capacitor 16 is provided at the DC bridge 15 between the positive and negative poles. The capacitor stabilises the voltage of the DC bridge 15.

A synthesis stage 17 is connected between the DC bridge 15 and the output disconnector switches 13a-b. The synthesis stage 17 comprises a plurality of cell switches 32a-d. A cell controller 18 is configured to control the cell switches 32a-d to provide a sinusoidal voltage on the output connection 12. The cell controller 18 can receiver inputs on a control interface 21, e.g. from the central controller 6 of Fig 1, affecting how the cell controller 18 should synthesise the output AC power.

The cell controller 18 also collects measurements (e.g. voltages on the three inputs and current on the output 12). In this way, the cell controller can provide status data on its control interface 21, e.g. to the central controller 6 of Fig 1, to enable external monitoring of the converter cell 2, e.g. detection of when the converter cell 2 is faulty.

A disconnector input 19 is provided for receiving a signal external from the converter cell 2 to control the state of each one of the input disconnector switches 11a-c and the at least one output disconnector switch 13a-b. The disconnector input 19 can be a single input routing appropriate control signal to the input disconnector switches 11a-c and the output disconnector switches 13a-b. Alternatively, the disconnector input 19 is made up of multiple sub-inputs, e.g. one for the input disconnector switches 11a-c and one for the output disconnector switches 13a-b. In any case, the disconnector input 19 does not pass through the cell controller 18 to control the disconnector switches 11a-c, 13a-b. In this way, even if the cell controller 18 fails, the central controller can control the disconnector switches 11a-c, 13a-b, which significantly increases reliability. Also, the interface between the cell controller 18 and the central controller can be made efficient since the cell controller 18 is relieved from communication related to the disconnection.

Hence, the central controller is used for fault management, for reliably disconnecting any faulty converter cell. At the same time, the cell controller is used for normal operational control, i.e. for the synthesis of output AC power, which alleviates the task of the central controller. This allocation of control tasks between the cell controller and the central controller achieves a great balance between reliability and efficiency.

In a normal operating state, the input disconnector switches 11a-c are in conducting (closed) state while the output disconnector switch(es) are in a non-conducting (open) state.

When the converter cell 2 is to be disconnected, e.g. if the central controller 6 considers the converter cell 2 to be faulty, one or more signals on the disconnector input 19 causes the input disconnector switches 11a-c to be set in a non-conducting (open) state while the output disconnector switch(es) are caused to be in a conducting (closed) state. In this way, other converter cells of the subsea AC/AC power converter can still function normally and contribute to the power conversion. The faulty converter cell is in a stable inactive state and does not need to be replaced until the next scheduled maintenance.

Optionally, a discharging resistor 20 provided in parallel to the capacitor 16, which allows the DC bridge 17 to discharge, e.g. when the converter cell 2 is disconnected.

Each one of the input disconnector switches na-c and each one of the at least one output disconnector switches 13a-b is optionally a mechanical switch. This provides a bypass state which is more stable than if each one of the at least one output disconnector switches 13a-b is a semiconductor switch. The disconnector switches do not need to be exceptionally fast, but it is beneficial if they are stable.

One type of mechanical switch which can be used is based on a piston actuated by a magnetic field. The piston is conductive. When the switch is in a conductive (closed) state, the piston is in a position which ensures there is a conductive path between the two terminals of the switch. When the switch is in a non-conductive (open) state, the piston is in a position such that there is not conductive path between the two terminals of the switch. The position of the piston can be controlled by an electric current through a coil which generates the magnetic field which displaces the piston.

One type of mechanical switch which can be used is based on a piston actuated by a hydraulics. Again, the piston is conductive. When the switch is in a conductive (closed) state, the piston is in a position which ensures there is a conductive path between the two terminals of the switch. When the switch is in a non-conductive (open) state, the piston is in a position such that there is not conductive path between the two terminals of the switch. The position of the piston can be controlled by oil pressure controlled by a valve, causing hydraulic pressure which moves the piston.

## Claims

1. A subsea AC/AC power converter cell (2, 2a-i) comprising:
a cell input connection (10) comprising input terminals for at least two phases;
input disconnector switches (11a-c) connected to respective input terminals of the input connection (10);
a cell output connection (12) having two terminals for providing output AC power of one phase;
two output disconnector switches (13a-b) connected between the terminals of the cell output connection (12);
a rectifier stage (14) connected between the input disconnector switches (11a-c) and a DC bridge (15);
a capacitor (16) provided at the DC bridge (15);
a synthesis stage (17) connected between the DC bridge (15) and the output disconnector switches (13a-b), the synthesis stage (17) comprising a plurality of cell switches (32a-d) to synthesise output AC power;
a cell controller (18) configured to control the cell switches (32a-d) to provide a sinusoidal voltage on the output connection (12); and
at least one disconnector input (19) for receiving a signal external from the subsea AC/AC power converter cell (2) to control the state of each one of the input disconnector switches (11a-c) and the output disconnector switches (13a-b).

2. The subsea AC/AC power converter cell (2, 2a-i) according to claim 1, further comprising a discharging resistor (20) provided in parallel to the capacitor (16).

3. The subsea AC/AC power converter cell (2, 2a-i) according to claim 1 or 2, wherein the cell input connection (10) comprises input terminals for three phases.

4. The subsea AC/AC power converter cell (2, 2a-i) according to any one of the preceding claims, wherein the number of input disconnector switches (11a-c) correspond to the number of phases of the cell input connection (10).

5. The subsea AC/AC power converter cell (2, 2a-i) according to any one of the preceding claims, wherein each one of the input disconnector switches (11a-c) and each one of the at least one output disconnector switches (13a-b) is a mechanical switch.

6. A subsea AC/AC power converter (1) comprising:
a main AC input connection (3) for receiving AC power of at least two phases;
a plurality of subsea AC/AC power converter cells (2, 2a-i) according to any one of the preceding claims;
a multi-winding transformer (4) connected between the main AC input connection (3) and each one of the plurality of subsea AC/AC power converter cells (2, 2a-i);
a main AC output connection (5) connected to the cell output connections (12) of the plurality of subsea AC/AC power converter cells (2, 2a-i); and
a central controller (6) connected to the disconnector inputs (19) of each one of the plurality of subsea AC/AC power converter cells (2, 2a-i).

7. The subsea AC/AC power converter (1) according to claim 6, wherein the central controller (6) is configured to detect a faulty subsea AC/AC power converter cells and to, when a faulty subsea AC/AC power converter cells is detected, open the input disconnector switches (11a-c) and close the output disconnector switches (13a-b).

8. The subsea AC/AC power converter according to claim 6, wherein the main AC output connection (5) comprises a plurality of phases and wherein the cell output connection (12) of each one of the plurality of subsea AC/AC power converter cells (2, 2a-i) is connected to only one of the plurality of phases.

9. The subsea AC/AC power converter according to claim 8, wherein there is the same number of subsea AC/AC power converter cells (2, 2a-i) connected to each one of the plurality of phases of the main AC output connection (5).

10. The subsea AC/AC power converter according to any one of claims 6 to 9, wherein the power converter is a subsea power converter comprising a housing filled with a dielectric liquid and also comprising a pressure compensator arranged to balance the internal pressure to the external pressure.

## Patentansprüche

1. Unterwasser-AC/AC-Leistungsumsetzerzelle (2, 2a-i), die Folgendes umfasst:
eine Zelleneingangsverbindung (10), die Eingangsanschlüsse für mindestens zwei Phasen umfasst;
Eingangstrennschalter (11a-c), die mit jeweiligen Eingangsanschlüssen der Eingangsverbindung (10) verbunden sind;
eine Zellenausgangsverbindung (12), die zwei Anschlüsse aufweist, um Ausgangs-AC-Leistung einer Phase bereitzustellen;
zwei Ausgangstrennschalter (13a-b), die zwischen die Anschlüsse der Zellenausgangsverbindung (12) geschaltet sind;
eine Gleichrichterstufe (14), die zwischen die Eingangstrennschalter (lla-c) und eine DC-Brücke (15) geschaltet ist;
einen Kondensator (16), der an der DC-Brücke (15) bereitgestellt ist;
eine Synthesestufe (17), die zwischen die DC-Brücke (15) und die Ausgangstrennschalter (13a-b) geschaltet ist, wobei die Synthesestufe (17) mehrere Zellenschalter (32a-d) umfasst, um Ausgangs-AC-Leistung zu synthetisieren;
eine Zellensteuereinheit (18), die konfiguriert ist, die Zellenschalter (32a-d) zu steuern, um eine sinusförmige Spannung auf der Ausgangsverbindung (12) bereitzustellen, und
mindestens einen Trennschaltereingang (19) zum Empfangen eines Signals von außerhalb der Unterwasser-AC/AC-Leistungsumsetzerzelle (2), um den Zustand von jedem der Eingangstrennschalter (lla-c) und der Ausgangstrennschalter (13a-b) zu steuern.

2. Unterwasser-AC/AC-Leistungsumsetzerzelle (2, 2a-i) nach Anspruch 1, die ferner einen Entladungswiderstand (20) umfasst, der parallel zu dem Kondensator (16) vorgesehen ist.

3. Unterwasser-AC/AC-Leistungsumsetzerzelle (2, 2a-i) nach Anspruch 1 oder 2, wobei die Zelleneingangsverbindung (10) Eingangsanschlüsse für drei Phasen umfasst.

4. Unterwasser-AC/AC-Leistungsumsetzerzelle (2, 2a-i) nach einem der vorhergehenden Ansprüche, wobei die Anzahl der Eingangstrennschalter (lla-c) der Anzahl von Phasen der Zelleneingangsverbindung (10) entspricht.

5. Unterwasser-AC/AC-Leistungsumsetzerzelle (2, 2a-i) nach einem der vorhergehenden Ansprüche, wobei jeder der Eingangstrennschalter (lla-c) und jeder der Ausgangstrennschalter (13a-b) ein mechanischer Schalter ist.

6. Unterwasser-AC/AC-Leistungsumsetzer (1), der Folgendes umfasst:
eine Haupt-AC-Eingangsverbindung (3) zum Aufnehmen von AC-Leistung von mindestens zwei Phasen;
mehrere Unterwasser-AC/AC-Leistungsumsetzerzellen (2, 2a-i) nach einem der vorhergehenden Ansprüche;
einen Transformator (4) mit mehreren Wicklungen, der zwischen die Haupt-AC-Eingangsverbindung (3) und jede der mehreren Unterwasser-AC/AC-Leistungsumsetzerzellen (2, 2a-i) geschaltet ist;
eine Haupt-AC-Ausgabeverbindung (5), die mit den Zellenausgangsverbindungen (12) der mehreren Unterwasser-AC/AC-Leistungsumsetzerzellen (2, 2a-i) verbunden ist, und
eine zentrale Steuereinheit (6), die mit den Trennschaltereingängen (19) von jeder der mehreren Unterwasser-AC/AC-Leistungsumsetzerzellen (2, 2a-i) verbunden ist.

7. Unterwasser-AC/AC-Leistungsumsetzer (1) nach Anspruch 6, wobei die zentrale Steuereinheit (6) konfiguriert ist, eine fehlerhafte Unterwasser-AC/AC-Leistungsumsetzerzelle zu detektieren und dann, wenn eine fehlerhafte Unterwasser-AC/AC-Leistungsumsetzerzelle detektiert wird, die Eingangstrennschalter (lla-c) zu öffnen und die Ausgangstrennschalter (13a-b) zu schließen.

8. Unterwasser-AC/AC-Leistungsumsetzer nach Anspruch 6, wobei die Haupt-AC-Ausgangsverbindung (5) mehrere Phasen umfasst und wobei die Zellenausgangsverbindung (12) von jeder der mehreren Unterwasser-AC/AC-Leistungsumsetzerzellen (2, 2a-i) nur mit einer der mehreren Phasen verbunden ist.

9. Unterwasser-AC/AC-Leistungsumsetzer nach Anspruch 8, wobei es dieselbe Anzahl von Unterwasser-AC/AC-Leistungsumsetzerzellen (2, 2a-i) gibt, die mit jeder der mehreren Phasen der Haupt-AC-Ausgangsverbindung (5) verbunden sind.

10. Unterwasser-AC/AC-Leistungsumsetzer nach einem der Ansprüche 6 bis 9, wobei der Leistungsumsetzer ein Unterwasserleistungsumsetzer ist, der ein Gehäuse umfasst, das mit einer dielektrischen Flüssigkeit gefüllt ist, und auch eine Druckausgleichsvorrichtung umfasst, die dafür ausgelegt ist, den Innendruck dem Außendruck anzupassen.

## Revendications

1. Cellule d'un convertisseur de puissance CA/CA sous-marin (2, 2a-i) comprenant :
une connexion d'entrée de cellule (10) comprenant des bornes d'entrée pour au moins deux phases ;
des commutateurs de déconnexion d'entrée (lla-c) connectés aux bornes d'entrée respectives de la connexion d'entrée (10) ;
une connexion de sortie de cellule (12) ayant deux bornes pour fournir une puissance CA de sortie d'une phase ;
deux commutateurs de déconnexion de sortie (13a-b) connectés entre les bornes de la connexion de sortie de cellule (12) ;
un étage de redresseur (14) connecté entre les commutateurs de déconnexion d'entrée (lla-c) et un pont CC (15) ;
un condensateur (16) prévu au niveau du pont CC (15) ;
un étage de synthèse (17) connecté entre le pont CC (15) et les commutateurs de déconnexion de sortie (13a-b), l'étage de synthèse (17) comprenant une pluralité de commutateurs de cellules (32a-d) pour synthétiser une puissance CA de sortie ;
un contrôleur de cellule (18) configuré pour contrôler les commutateurs de cellules (32a-d) pour fournir une tension sinusoïdale sur la connexion de sortie (12) ; et
au moins une entrée de déconnexion (19) pour recevoir un signal externe à la cellule du convertisseur de puissance CA/CA sous-marin (2) pour commander l'état de chacun des commutateurs de déconnexion d'entrée (lla-c) et des commutateurs de déconnexion de sortie (13a-b).

2. Cellule d'un convertisseur de puissance CA/CA sous-marin (2, 2a-i) selon la revendication 1, comprenant en outre une résistance de décharge (20) prévue en parallèle au condensateur (16).

3. Cellule d'un convertisseur de puissance CA/CA sous-marin (2, 2a-i) selon la revendication 1 ou 2, dans laquelle la connexion d'entrée de cellule (10) comprend des bornes d'entrée pour trois phases.

4. Cellule d'un convertisseur de puissance CA/CA sous-marin (2, 2a-i) selon l'une quelconque des revendications précédentes, dans laquelle le nombre de commutateurs de déconnexion d'entrée (lla-c) correspond au nombre de phases de la connexion d'entrée de cellule (10) .

5. Cellule d'un convertisseur de puissance CA/CA sous-marin (2, 2a-i) selon l'une quelconque des revendications précédentes, dans laquelle chacun des commutateurs de déconnexion d'entrée (lla-c) et chacun de l'au moins un des commutateurs de déconnexion de sortie (13a-b) est un commutateur mécanique.

6. Convertisseur de puissance CA/CA sous-marin (1) comprenant :
une connexion d'entrée CA principale (3) pour recevoir une puissance CA d'au moins deux phases ;
une pluralité de cellules du convertisseur de puissance CA/CA sous-marin (2, 2a-i) selon l'une quelconque des revendications précédentes ;
un transformateur à enroulement multiple (4) connecté entre la connexion d'entrée CA principale (3) et chacune de la pluralité de cellules du convertisseur de puissance CA/CA sous-marin (2, 2a-i) ;
une connexion de sortie CA principale (5) connectée aux connexions de sortie de cellule (12) parmi la pluralité de cellules du convertisseur de puissance CA/CA sous-marin (2, 2a-i) ; et
un contrôleur central (6) connecté aux entrées de déconnexion (19) de chacune de la pluralité de cellules du convertisseur de puissance CA/CA sous-marin (2, 2ai) .

7. Convertisseur de puissance CA/CA sous-marin (1) selon la revendication 6, dans lequel le contrôleur central (6) est configuré pour détecter des cellules du convertisseur de puissance CA/CA sous-marin défaillantes et pour, lorsque des cellules du convertisseur de puissance CA/CA sous-marin défaillantes sont détectées, ouvrir les commutateurs de déconnexion d'entrée (lla-c) et fermer les commutateurs de déconnexion de sortie (13a-b).

8. Convertisseur de puissance CA/CA sous-marin selon la revendication 6, dans lequel la connexion de sortie CA principale (5) comprend une pluralité de phases, et dans lequel la connexion de sortie de cellule (12) de chacune de la pluralité de cellules du convertisseur de puissance CA/CA sous-marin (2, 2a-i) est connectée à seulement une de la pluralité de phases.

9. Convertisseur de puissance CA/CA sous-marin selon la revendication 8, dans lequel il existe le même nombre de cellules du convertisseur de puissance CA/CA sous-marin (2, 2a-i) connectées à chacune de la pluralité de phases de la connexion de sortie CA principale (5).

10. Convertisseur de puissance CA/CA sous-marin selon l'une quelconque des revendications 6 à 9, dans lequel le convertisseur de puissance est un convertisseur de puissance sous-marin comprenant un boîtier rempli d'un liquide diélectrique et comprenant également un compensateur de pression disposé pour équilibrer la pression interne par rapport à la pression externe.
